# FASCICULE DE BREVET EUROPEEN

(11) **EP 2 323 306 B1**
(45) Date de publication et mention de la délivrance du brevet: **20.02.2013**
(21) Numéro de dépôt: 10191438.0
(22) Date de dépôt: 16.11.2010
(51) Int. Cl.: H04L 9/08, H04L 29/06, G06F 21/60

(54) **Procédé de transmission de données sécurisé et système de chiffrement et de déchiffrement permettant une telle transmission**
Gesichertes Datenübertragungsverfahren sowie Ver- und Entschlüsselungssystem, das eine solche Datenübertragung ermöglicht
Secured data transmission method and encryption and decryption system enabling such a transmission

(30) Priorité: 17.11.2009 FR 0905513
(43) Date de publication de la demande: 18.05.2011
(73) Titulaire: Thales, 92200 Neuilly Sur Seine (FR)
(72) Inventeur: Bettan, Olivier, 91380 Chilly-Mazarin (FR)
(74) Mandataire: Lucas, Laurent Jacques

(56) Documents cités:
- WO-A1-2005/053254
- US-A1- 2004 030 918
- US-A1- 2008 107 271

## Description

La présente invention concerne un procédé de transmission de données sécurisé et un système de chiffrement et de déchiffrement permettant une telle transmission. Elle s'applique notamment pour la transmission de données sécurisées en milieu non protégé tel que le réseau internet notamment.

Les transmissions de données sécurisées se font généralement en cryptant ces données. Un document chiffré envoyé à un destinataire donné doit pouvoir être décrypté par celui-ci. A cette fin, ce destinataire doit posséder la bonne clé de déchiffrement.

Lorsqu'il y a plusieurs destinataires autorisés, le mode de transmission dit asymétrique impose à l'émetteur d'utiliser la clé publique de chaque destinataire pour chiffrer. L'émetteur doit donc être en mesure d'accéder à ces clés publiques et faire confiance au système responsable de leur délivrance.

L'autre mode de transmission, dit symétrique, évite l'utilisation d'une clé publique. Une même clé est utilisée pour le chiffrement et le déchiffrement d'un document. Ce mode symétrique impose la transmission aux destinataires du document chiffré et de la clé utilisée. Si un attaquant parvient à s'approprier simultanément le document chiffré et la clé utilisée, il est alors en mesure de lire le contenu du document. La gestion de la clé est donc souvent problématique dans la mesure où la clé est susceptible d'être interceptée. Elle oblige généralement à un échange de main-à-main et à la mise au secret de la clé par les différents participants, d'où une multiplication des possibilités de vol, de copie ou de compromission.

Des solutions sont connues pour tenter de surmonter ces problèmes de sécurité de transmission. Ainsi, la cryptographie quantique peut permettre de garantir l'intégrité d'une clé échangée par les participants, mais elle est couteuse à mettre en oeuvre. En cas de modification ou d'interception détectée, la clé est rejetée et un nouvel échange est initialisé.

La demande de brevet WO-2005/053254 divulgue un procédé de transmission de données sécurisé entre un émetteur et un destinataire en utilisant un réseau de confiance qui administre les clés de chiffrement et/ou chiffre les données. La demande de brevet US 2004/030918 divulgue un procédé similaire, selon lequel les clefs de chiffrement sont divisées dans deux parties, une partie restant stockée dans un serveur de confiance, et une autre partie étant transmise à l'émetteur et au destinataire.

La gestion des clés pose cependant plusieurs inconvénients, notamment en ce qui concerne la génération, le stockage et l'échange des clés. En particulier :
- les destinataires de messages doivent être connus et identifiés à chaque envoi ;
- les méthodes et techniques utilisées sont généralement lourdes à mettre en oeuvre et coûteuses ;
- le stockage d'une clé partagée est problématique et nécessite des moyens spécifiques ;
- la multiplication des participants augmente les risques de compromission ;
- une attaque de type « Man-in-the-middle » permet à un intrus de se substituer à un destinataire souhaité, dans ce cas si un émetteur de donnée se laisse abuser il communique l'ensemble des éléments constituant le secret, la clé et le document chiffré.

Un but de l'invention est notamment de pallier les inconvénients précités. A cet effet, l'invention a pour objet un procédé de transmission sécurisée de données entre au moins un émetteur et un destinataire, le procédé comportant au moins :
- une étape d'authentification de l'émetteur à un réseau de confiance pour requérir le chiffrement desdites données ;
- une étape de chiffrement desdites données par le réseau de confiance à l'aide d'une clé de chiffrement ;
- une étape de découpage de la clé de chiffrement en blocs quelconques ;
- une étape de stockage des blocs dans un espace mémoire ;
- une étape d'une génération d'un index comportant la séquence d'adresses desdits blocs dans l'espace mémoire ;
- une étape de délivrance, par le réseau de confiance, des données chiffrées et de l'index à l'émetteur ;
les données chiffrées et ledit index étant transmis au destinataire via un réseau, le destinataire étant apte à s'authentifier auprès du réseau de confiance pour lui fournir les données chiffrées et ledit index, le réseau de confiance reconstituant la clé de chiffrement à partir de l'index pour déchiffrer les données chiffrées et restituant les données déchiffrées au destinataire.

La clé de chiffrement est par exemple une clé de chiffrement jetable à usage unique.

Avantageusement, les blocs de la clé de chiffrement sont par exemple stockés selon un mécanisme de déduplication.

L'invention a également pour objet un système de chiffrement et de déchiffrement de données, ledit système permettant une transmission sécurisée de données chiffrées entre un utilisateur émetteur et un utilisateur récepteur, le système comportant au moins un réseau de confiance et une infrastructure d'authentification des utilisateurs sur ledit réseau de confiance, ce dernier comportant au moins :
- des moyens de chiffrement et de déchiffrement de données au moyen d'une clé de chiffrement ;
- des moyens de stockage de la clé de chiffrement et de génération d'un index lors de chaque requête de chiffrement de données, ladite requête étant émise par un utilisateur, l'index étant créé selon les étapes suivantes:
   - découpage de la clé de chiffrement en blocs quelconques;
   - stockage des blocs dans un espace mémoire ;
   - génération de index comportant la séquence d'adresses desdits blocs dans l'espace mémoire, les données chiffrées étant délivrées à l'utilisateur émetteur avec l'index ;
   - une étape de délivrance, par le réseau de confiance, des données chiffrées et de l'index à l'émetteur ;
- des moyens pour reconstituer la clé de chiffrement à partir d'un index lors d'une requête de déchiffrement émise par un utilisateur, ladite requête étant accompagnée dudit index et des données chiffrées, les moyens de chiffrement et de déchiffrement effectuant le déchiffrement des données au moyen de la clé de chiffrement reconstituée.

Les moyens de chiffrement et de déchiffrement génèrent par exemple avant chaque chiffrement une clé de chiffrement jetable, à usage unique, cette clé étant utilisée pour le chiffrement.

Les moyens de stockage et de génération de l'index mémorisent par exemple les blocs de la clé de chiffrement selon un mécanisme de déduplication.

Les moyens de stockage, de génération de l'index et de reconstitution de la clé de chiffrement peuvent être intégrés dans un même serveur.

Les moyens de chiffrement et de déchiffrement de données sont par exemple un serveur de chiffrement:
- recevant les requêtes de chiffrement avec les données à chiffrer;
- fournissant les clés de chiffrement aux moyens de stockage et de génération d'index ;
- recevant les données chiffrées et la clé de chiffrement reconstituée émises par les moyens de reconstitution de la clé de chiffrement;
- restituant les données déchiffrées ;

Le réseau de confiance comporte par exemple un serveur d'échanges:
- recevant les requêtes de déchiffrement avec les données chiffrées et l'index ;
- transmettant les données chiffrées et leur index aux moyens de reconstitution de la clé de chiffrement ;
- recevant les données chiffrées et leur index émis par les moyens de stockage et de génération d'index ;
- délivrant les données chiffrées et leur index.

Un serveur de déduplication comporte par exemple les moyens de stockage, de génération de l'index et de reconstitution de la clé de chiffrement.

D'autres caractéristiques et avantages de l'invention apparaîtront à l'aide de la description qui suit faite en regard de dessins annexés qui représentent:
- la figure 1, une illustration du principe de l'invention ;
- la figure 2, un exemple de réalisation d'un index utilisé par le procédé selon l'invention ;
- la figure 3, une illustration d'un mode de réalisation possible d'un système selon l'invention avec un exemple d'utilisation.

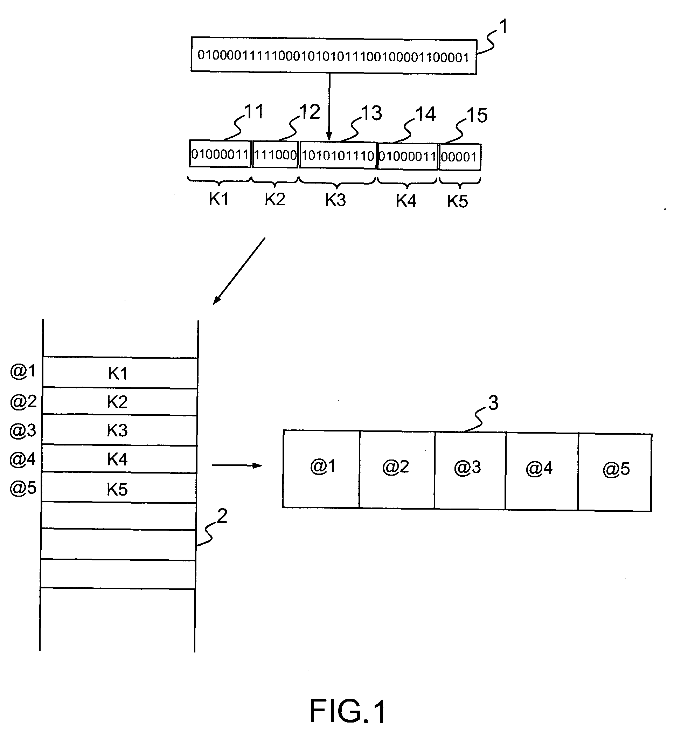

La figure 1 illustre le principe de mise en oeuvre du procédé selon l'invention. Selon l'invention on stocke puis on distribue un index, issu du découpage en tronçons d'une clé de chiffrement 1, en même temps que le document chiffré. Cette clé 1 correspond à un mot codé sur un nombre de bits donné. Dans l'exemple de la figure 1 la clé est découpée en cinq blocs, ou tronçons, 11, 12, 13, 14, 15 correspond à cinq mots K1, K2, K3, K4, K5. Plus généralement, la clé peut être découpée en une multitude de blocs Ki, de taille variable, dont la juxtaposition permet par la suite de reconstituer la clé elle-même.

Les tronçons K1, K2, K3, K4, K5 sont ensuite stockés dans un espace mémoire indexé 2. Le bloc K1 est stocké à une adresse @1, le bloc K2 est stocké à une adresse @2, le bloc K3 est stocké à une adresse @3, le bloc K4 est stocké à une adresse @4 et le bloc K5 est stocké à une adresse @5. Plus généralement, un bloc Ki est stocké à une adresse @ i. L'index 3, formé de la séquence d'adresses @1, @2, @3, @4, @5, plus généralement @1, @2, ...@ i, ... @N, permet de reconstituer la clé de chiffrement initiale en pointant les adresses successives de l'espace mémoire Avantageusement, la clé de chiffrement est stockée par morceau et doit être reconstruite pour être utilisée. Cette reconstruction n'est possible qu'en possession de l'index 3.

Selon l'invention l'index 3, formé de la séquence d'adresses @1, @2, @3, @4, @5, plus généralement @1, @2, ...@ i, ... @N, est transmis avec les données cryptées. Le destinataire des données reçoit donc ces données cryptées accompagnées de cet index. A partir de cet index il reconstitue au travers d'un réseau de confiance la clé de chiffrement 1 afin de décrypter les données transmises. Avantageusement, l'index 3 n'apporte aucune information sur la clé de chiffrement, secrète, en dehors du réseau de confiance, mais il permet de reconstruire à la demande la clé de chiffrement qu'il décrit si on y est autorisé. Avantageusement, l'index 3 peut être un mot plus court que le mot 1 constituant la clé de chiffrement d'origine.

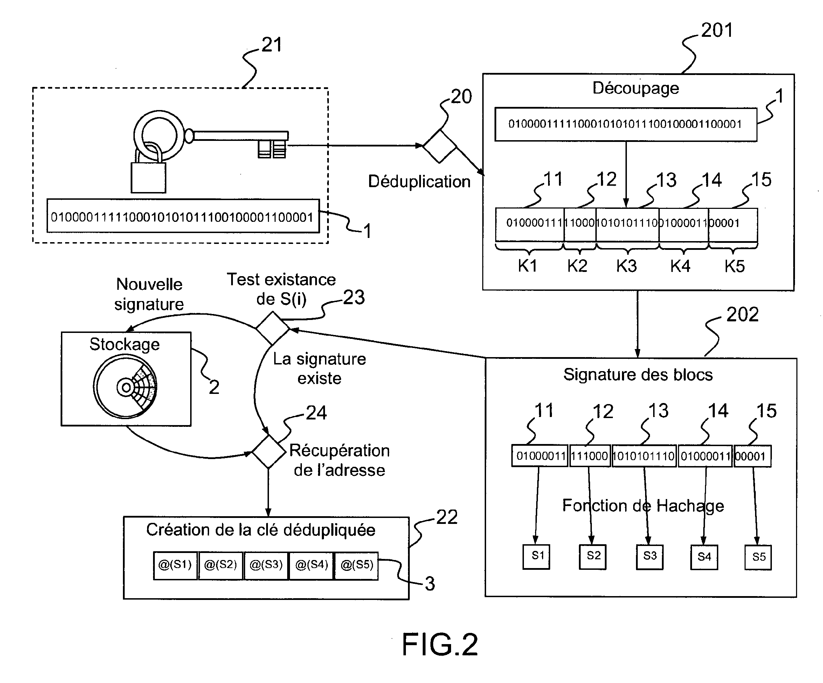

La figure 2 présente un autre mode de création de l'index, utilisant un processus de déduplication 20 de la clé de chiffrement 21. Dans ce cas le stockage des blocs Ki de la clé de chiffrement sont stockés selon le procédé connu de déduplication, destiné notamment à optimiser l'espace mémoire occupé par les blocs Ki. La déduplication, également appelée factorisation ou stockage d'instance unique, est une technique connue de sauvegarde de données, consistant à factoriser des séquences de données identiques afin d'économiser l'espace mémoire utilisé.

Comme dans le cas de la figure 1 le mot 1, constituant la clé de chiffrement, est découpée en une multitude de tronçons ou blocs 11, 12, 13, 14, 15. A titre d'exemple on considère toujours les mêmes cinq blocs que précédemment. Cette première étape de découpage 201 est suivie d'une deuxième étape 202 de signature des blocs utilisant une fonction classique de hachage. A chacun des blocs Ki est associé un condensé unique Sk, ces condensés servent par la suite à stocker les blocs Ki correspondant, dans l'espace mémoire 2. Un test 23 des signatures Sk est effectué. Une nouvelle occurrence d'un bloc déjà identifié n'est pas à nouveau sauvegardée mais est associé à une adresse pointant le même bloc déjà identifié. L'index 3 est créé par la récupération 24 des adresses des condensés. Cette opération de récupération d'adresses 24 utilise le résultat du test 23 et les adresses pointant les blocs en mémoire de stockage 2 pour former la séquence d'adresses qui permettra de reconstituer la clé de chiffrement d'origine 1. Dans l'exemple de la figure 2, le premier bloc 11 et le quatrième bloc 14 sont identiques. Ils possèdent alors le même condensé, ou même signature, S1. Les cinq blocs K1, K2, K3, K4, K5 sont stockés à l'aide des condensés S1, S2, S3, S4. L'index 3, formant une clé dédupliquée 22, est alors constitué des adresses à chacun des blocs Ki, ces adresses pointant les identifiants. Si on appelle @(S1), @(S2), @(S3), @(S4) les adresses respectives des identifiants S1, S2, S3, S4, il s'ensuit que :
- le bloc K1 est associé à l'adresse @(S1);
- le bloc K2 est associé à l'adresse @(S2);
- le bloc K3 est associé à l'adresse @(S3);
- le bloc K4 est associé à l'adresse @(S1);
- le bloc K5 est associé à l'adresse @(S4);

La clé dédupliquée 22 est alors l'index 3 constitué de la séquence d'adresses : @(S1), @(S2), @(S3), @(S1), @(S4).

Dans la suite de la description, on utilisera à titre d'exemple la clé dédupliquée 22, formée par le processus de déduplication.

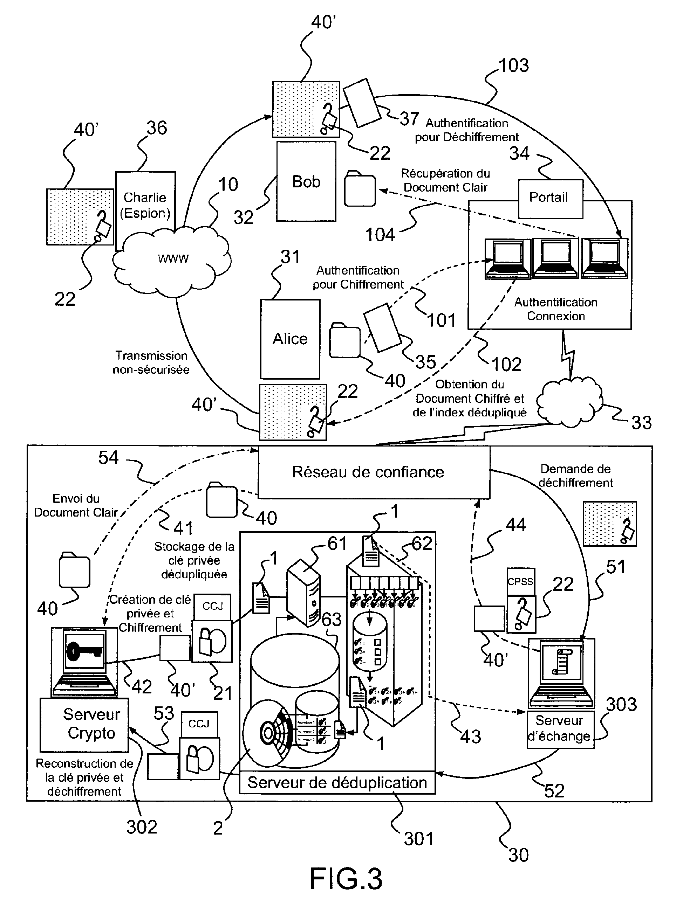

La figure 3 présente un exemple de mise en oeuvre du procédé selon l'invention et plus particulièrement un mode de réalisation possible d'un système selon l'invention.

Pour illustrer le fonctionnement d'un système selon l'invention on considère à titre d'exemple un premier acteur Alice 31 qui souhaite envoyer un document chiffré à un deuxième acteur Bob 32. Le document à chiffrer peut être tout type de fichier selon tout type de format.

L'invention utilise un réseau de confiance 30. La génération et le stockage de la clé de chiffrement 21, 1 sont effectués dans ce réseau de confiance, ainsi que la création et la gestion de la clé dédupliquée 22.

Ce réseau comporte au moins ;
- un serveur de déduplication 301;
- un serveur de chiffrement 302, ou tout autre outil de chiffrement et de déchiffrement ;
- et un serveur d'échange 303.

Ce réseau de confiance 30 est accessible uniquement aux acteurs autorisés, émetteurs et destinataires de documents chiffrés. L'accès au réseau de confiance 30 se fait au moyen d'une infrastructure d'authentification forte 33 accessibles uniquement aux acteurs autorisés, par exemple par l'intermédiaire d'un portail 34. Ces utilisateurs 31, 32 sont en mesure de s'authentifier sur ce réseau de confiance et disposent d'un compte applicatif dans le serveur d'échange 303 pour utiliser les services qu'il offre, c'est-à-dire notamment chiffrement et déchiffrement des documents ainsi que gestion de la clé de chiffrement et de sa clé dédupliquée.

Le serveur de déduplication répond notamment aux critères suivant:
- la taille des blocs qu'il génère est inférieure à la taille d'une clé, pour éviter d'obtenir un seul bloc Ki ;
- il utilise une fonction de hachage pour signer l'intégralité des blocs de la clé.

L'infrastructure d'authentification 33 utilise par exemple des moyens d'authentification biométrique ou des cartes à puces. Dans l'exemple de la figure 3, des cartes à puce d'authentification sont utilisées.

Dans une étape préalable 101 d'authentification pour chiffrement Alice envoie sur le portail 34 un document en clair 40 à chiffrer. Alice s'authentifie auprès du portail par exemple au moyen d'une carte à puce 35. A partir du portail une requête d'obtention du document chiffré et de sa clé dédupliquée est lancée auprès du réseau de confiance 30.

Dans une première étape 41, le document en clair 40 est présenté au serveur de chiffrement 302 qui effectue le chiffrement du document 40. Le serveur de chiffrement créée une clé de chiffrement par exemple jetable 21, à usage unique. Le document 40 est chiffré à l'aide d'un algorithme à clé privée en utilisant la clé 21 précédemment créée. Le serveur de chiffrement fournit donc le document chiffré 40' et la clé de chiffrement 21.

La clé de chiffrement 21 est envoyée ensuite 42 au serveur de déduplication 301. Cette clé 21 est stockée sur un référentiel utilisant un mécanisme de déduplication tel que précédemment décrit. Le serveur de déduplication créée par exemple la clé dédupliquée 22 conformément à la description de la figure 2. Lors de chaque requête de chiffrement émise par un utilisateur émetteur 31, la clé de chiffrement est découpée en blocs quelconques Ki, les blocs étant différents d'une requête à l'autre.

Plus précisément le serveur de déduplication comporte un serveur de sauvegarde 61, un serveur de déduplication 62 et une mémoire de stockage 63. Le serveur de sauvegarde 61 envoie la clé de chiffrement 21, c'est-à-dire en fait le mot 1 qui la constitue, au serveur de déduplication 62. Ce dernier délivre les tronçons Ki de la clé de chiffrement 21, 1 et les adresses @ i, les tronçons ou blocs Ki étant stockés dans la mémoire de stockage 63 aux adresses @ i.

Le serveur de déduplication délivre par ailleurs dans une étape suivante 43 la clé dédupliquée, formée de la séquence d'adresses @ i, et le document chiffré 40' au serveur d'échange 303. Dans une étape suivante 44, ce serveur 303 délivre alors au portail 34 le document chiffré 40' et la clé dédupliquée 22 via l'infrastructure sécurisée 33.

L'étape 102 d'obtention du document chiffré et de la clé dédupliquée à partir du portail 34 peut alors être engagée par Alice 31. Celle-ci est alors en possession de ce document chiffré 40' et de la clé dédupliquée 22. Plus précisément, Alice est en possession du document chiffré 40' et d'une clé privée sans secret 22. Avantageusement, Alice peut envoyer à Bob ce document chiffré et sa clé dédupliquée par le réseau public 10, internet par exemple. Un espion 36 posté sur ce réseau ne peut pas décrypter le document 40' puisque la clé dédupliquée 22 ne comporte aucune information permettant de reconstituer le document en clair 40. En particulier, en cas de perte ou de vol de la clé dédupliquée 22 et du document chiffré, même en connaissant l'algorithme de chiffrement l'attaquant 36 ne dispose pas d'information suffisante pour décrypter le message.

Une fois qu'il a reçu le document chiffré et sa clé de déduplication Bob engage une étape 103 d'authentification pour déchiffrement auprès du portail 34. Il s'authentifie par exemple au moyen d'une carte à puce 37. Une requête de récupération du document en clair est alors lancée via ce portail 34 et l'infrastructure sécurisée 33 vers le réseau de confiance 30.

Dans une première étape 51 une demande de déchiffrement du document chiffré 40' est envoyée au serveur d'échange 303. Le serveur d'échange fournit alors 52 la clé dédupliquée au serveur de déduplication 301 qui reconstitue la clé de chiffrement d'origine 21, 1 à partir des adresses @ i qu'elle contient et des blocs Ki mémorisés dans la mémoire de stockage 63. Dans une étape suivante 53 le serveur de déduplication 301 envoie le document chiffré 40' et la clé de chiffrement 21 au serveur de chiffrement 302 qui déchiffre le document 40' à l'aide de la clé 21. Puis dans une étape suivante 54, le serveur de chiffrement fournit au portail 34 le document déchiffré 40. Dans une dernière étape 104, Bob peut alors récupérer sur portail 34 le document en clair 40. Ainsi Bob, le destinataire de confiance, peut se connecter au système 34, 33, 30 de façon sure et utiliser la clé dédupliquée, sans secret, pour déchiffrer le document 40' sans avoir jamais connaissance de la clé de chiffrement 21 qui peut avantageusement être une clé jetable à usage unique.

## Revendications

1. Procédé de transmission sécurisée de données entre au moins un le émetteur (31) et un destinataire (32), le procédé comportant au moins :
- une étape d'authentification (101) de l'émetteur (31) à un réseau de confiance (30) pour requérir le chiffrement desdites données (40) ;
- une étape de chiffrement desdites données (40) par le réseau de confiance à l'aide d'une clé de chiffrement (21, 1) ;
ledit procédé **caractérisé en ce qu'**il comporte:
- une étape de découpage de la clé de chiffrement en blocs quelconques (11, 12, 13, 14, 15);
- une étape de stockage des blocs dans un espace mémoire (2, 63) ;
- une étape d'une génération d'un index (22) comportant la séquence d'adresses desdits blocs dans l'espace mémoire ;
- une étape de délivrance (102), par le réseau de confiance (30), des données chiffrées (40') et de l'index (22) à l'émetteur (31) ;
les données chiffrées (40') et ledit index (22) étant transmis au destinataire (32) via un réseau (10), le destinataire étant apte à s'authentifier (103) auprès du réseau de confiance pour lui fournir les données chiffrées (40') et ledit index (22), le réseau de confiance reconstituant la clé de chiffrement (21, 1) à partir de l'index (22) pour déchiffrer les données chiffrées (40') et restituant les données déchiffrées (40) au destinataire.

2. Procédé selon la revendication 1, **caractérisé en ce que** la clé de chiffrement (21) est une clé de chiffrement jetable à usage unique.

3. Procédé selon l'une quelconque des revendications précédentes, **caractérisé en ce que** les blocs de la clé de chiffrement sont stockés selon un mécanisme de déduplication.

4. Système de chiffrement et de déchiffrement de données (40), ledit système permettant une transmission sécurisée de données chiffrées (40') entre un utilisateur émetteur (31) et un utilisateur récepteur (32), et comportant au moins un réseau de confiance (30) et une infrastructure d'authentification (33, 34) des utilisateurs (31, 32) sur ledit réseau de confiance, ce dernier comportant au moins :
- des moyens (302) de chiffrement et de déchiffrement de données au moyen d'une clé de chiffrement (21) ;
le sysème **caractérisé en ce que** le réseau de confiance comporte:
- des moyens (301) de stockage (63) de la clé de chiffrement (21) et de génération (62) d'un index (22) lors de chaque requête (41) de chiffrement de données, ladite requête étant émise par un utilisateur (31), l'index étant créé selon les étapes suivantes :
- découpage de la clé de chiffrement (21) en blocs quelconques (K1, K2, K3, K4, K5) ;
- stockage des blocs dans un espace mémoire (2, 63) ;
- génération de l'index (22) comportant la séquence d'adresses desdits blocs dans l'espace mémoire ; des moyens (301, 303) pour délivrer des données chiffrées (40') et de l'index (22) à l'émetteur (31) ;
- des moyens (103) pour reconstituer la clé de chiffrement à partir d'un index (22) lors d'une requête de déchiffrement émise par un utilisateur (32), ladite requête étant accompagnée dudit index (22) et des données chiffrées (40'), les moyens de chiffrement et de déchiffrement (302) effectuant le déchiffrement des données au moyen de la clé de chiffrement reconstituée.

5. Système selon la revendication 4, **caractérisé en ce que** les moyens de chiffrement et de déchiffrement (302) génèrent avant chaque chiffrement une clé de chiffrement (21) jetable, à usage unique, cette clé étant utilisée pour le chiffrement.

6. Système selon l'une quelconque des revendications 4 ou 5, **caractérisé en ce que** les moyens (301) de stockage et de génération de l'index mémorisent les blocs de la clé de chiffrement (21) selon un mécanisme de déduplication.

7. Système selon l'une quelconque des revendications 4 à 6, **caractérisé en ce que** les moyens de stockage, de génération de l'index et de reconstitution de la clé de chiffrement sont intégrés dans un même serveur (301).

8. Système selon l'une quelconque des revendications 4 à 7, **caractérisé en ce que** les moyens (302) de chiffrement et de déchiffrement de données sont un serveur de chiffrement :
- recevant (41) les requêtes de chiffrement avec les données (40) à chiffrer ;
- fournissant (42) les clés de chiffrement (21) aux moyens (301) de stockage et de génération d'index ;
- recevant (53) les données chiffrées et la clé de chiffrement reconstituée émises par les moyens (301) de reconstitution de la clé de chiffrement ;
- restituant (54) les données déchiffrées ;

9. Système selon l'une quelconque des revendications 4 à 8, **caractérisé en ce que** le réseau de confiance (30) comporte un serveur d'échanges (303) :
- recevant (51) les requêtes de déchiffrement avec les données chiffrées (40') et l'index (22) ;
- transmettant (52) les données chiffrées et leur index aux moyens (103) de reconstitution de la clé de chiffrement ;
- recevant (43) les données chiffrées et leur index (22) émis par les moyens (301) de stockage et de génération d'index ;
- délivrant (44) les données chiffrées et leur index.

10. Système selon l'une quelconque des revendications 4 à 9, **caractérisé en ce qu'**un serveur de déduplication (301) comporte les moyens de stockage, de génération de l'index et de reconstitution de la clé de chiffrement.

## Claims

1. Method for securely transmitting data between at least one sender (31) and one recipient (32), said method comprising at least:
- a step of authenticating (101) the sender (31) to a trusted network (30) so as to request the encryption of the said data (40);
- a step of encryption of the said data (40) by the trusted network with the aid of an encryption key (21, 1);
said method being **characterized in that** it comprises:
- a step of slicing the encryption key into arbitrary blocks (11, 12, 13, 14, 15);
- a step of storing the blocks in a memory space (2, 63);
- a step of generation of an index (22) comprising the sequence of addresses of the said blocks in the memory space;
- a step of delivery (102), by the trusted network (30), of the encrypted data (40') and of the index (22) to the sender (31);
the encrypted data (40') and the said index (22) being transmitted to the recipient (32) via a network (10), the recipient being able to authenticate (103) himself with the trusted network so as to provide it with the encrypted data (40') and the said index (22), the trusted network reconstructing the encryption key (21, 1) on the basis of the index (22) so as to decrypt the encrypted data (40') and restoring the decrypted data (40) to the recipient.

2. Method according to claim 1, **characterized in that** the encryption key (21) is a single-use disposable encryption key.

3. Method according to any one of the preceding claims, **characterized in that** the blocks of the encryption key are stored according to a deduplication mechanism.

4. System for encrypting and decrypting data (40), the said system allowing secure transmission of encrypted data (40') between a sender user (31) and a receiver user (32), and comprising at least one trusted network (30) and one infrastructure for authentication (33, 34) of the users (31, 32) on the said trusted network, the latter comprising at least:
- means (302) for encrypting and decrypting data by means of an encryption key (21);
the said system being **characterized in that** the trusted network comprises:
- means (301) for storing (63) the encryption key (21) and generating (62) an index (22) upon each data encryption request (41), the said request being sent by a user (31), the index being created according to the following steps:
- slicing of the encryption key (21) into arbitrary blocks (K1, K2, K3, K4, K5);
- storing the blocks in a memory space (2, 63);
- generation of index (22) comprising the sequence of addresses of the said blocks in the memory space, means (301, 303) to deliver the encrypted data (40') and the index (22) to the sender (31);
- means (103) for reconstructing the encryption key on the basis of an index (22) upon a decryption request sent by a user (32), the said request being accompanied by the said index (22) and encrypted data (40'), the encryption and decryption means (302) performing the decryption of the data by means of the reconstructed encryption key.

5. System according to claim 4, **characterized in that** the encryption and decryption means (302) generate before each encryption a single-use disposable encryption key (21), this key being used for encryption.

6. System according to any one of claims 4 or 5, **characterized in that** the means (301) for storing and for generating the index store the blocks of the encryption key (21) according to a deduplication mechanism.

7. System according to any one of claims 4 to 6, **characterized in that** the means for storing, for generating the index and for reconstructing the encryption key are integrated into one and the same server (301).

8. System according to any one of claims 4 to 7, **characterized in that** the means (302) for encrypting and decrypting data are an encryption server:
- receiving (41) the encryption requests with the data (40) to be encrypted;
- providing (42) the encryption keys (21) to the index generation and storage means (301);
- receiving (53) the encrypted data and the reconstructed encryption key that are sent by the means (301) for reconstructing the encryption key;
- restoring (54) the decrypted data.

9. System according to any one of claims 4 to 8, **characterized in that** the trusted network (30) comprises an exchange server (303):
- receiving (51) the decryption requests with the encrypted data (40') and the index (22);
- transmitting (52) the encrypted data and their index to the means (103) for reconstructing the encryption key;
- receiving (43) the encrypted data and their index (22) sent by the index generation and storage means (301);
- delivering (44) the encrypted data and their index.

10. System according to any one of claims 4 to 9, **characterized in that** a deduplication server (301) comprises the means for storing, for generating the index and for reconstructing the encryption key.

## Patentansprüche

1. Verfahren zum gesicherten Übertragen von Daten zwischen wenigstens einem Sender (31) und einem Empfänger (32), wobei das Verfahren wenigstens die folgenden Schritte beinhaltet:
- einen Schritt (101) des Authentifizierens des Senders (31) bei einem Vertrauensnetz (30), um die Verschlüsselung der Daten (40) anzufordern;
- einen Schritt des Verschlüsselns der Daten (40) durch das Vertrauensnetz mit Hilfe eines Verschlüsselungsschlüssels (21, 1);
wobei das Verfahren **dadurch gekennzeichnet ist, dass** es Folgendes beinhaltet:
- einen Schritt des Unterteilens des Verschlüsselungsschlüssels in beliebige Blöcke (11, 12, 13, 14, 15);
- einen Schritt des Speicherns der Blöcke in einem Speicherraum (2, 63);
- einen Schritt des Erzeugens eines Index (22), der die Adressfolge der Blöcke in dem Speicherraum enthält;
- einen Schritt des Lieferns (102), durch das Vertrauensnetz (30), der verschlüsselten Daten (40') und des Index (22) zu dem Sender (31);
wobei die verschlüsselten Daten (40') und der Index (22) über ein Netzwerk (10) zum Empfänger (32) übertragen werden, wobei sich der Empfänger bei dem Vertrauensnetz authentifizieren (103) kann, um ihm die verschlüsselten Daten (40') und den Index (22) zu liefern, wobei das Vertrauensnetz den Verschlüsselungsschlüssel (21, 1) anhand des Index (22) rekonstituiert, um die verschlüsselten Daten (40') zu entschlüsseln und die entschlüsselten Daten (40) zum Empfänger wiederherstellt.

2. Verfahren nach Anspruch 1, **dadurch gekennzeichnet, dass** der Verschlüsselungsschlüssel (21) ein wegwerfbarer Verschlüsselungsschlüssel für den einmaligen Gebrauch ist.

3. Verfahren nach einem der vorherigen Ansprüche, **dadurch gekennzeichnet, dass** die Blöcke des Verschlüsselungsschlüssels gemäß einem Deduplizierungsmechanismus gespeichert werden.

4. System zum Ver- und Entschlüsseln von Daten (40), wobei das System eine gesicherte Übertragung von verschlüsselten Daten (40') zwischen einem sendenden Benutzer (31) und einem empfangenden Benutzer (32) zulässt und wenigstens ein Vertrauensnetz (30) und eine Infrastruktur (33, 34) zum Authentifizieren von Benutzern (31, 32) auf dem Vertrauensnetz umfasst, wobei Letzteres wenigstens Folgendes umfasst:
- Mittel (302) zum Ver- und Entschlüsseln von Daten mittels eines Verschlüsselungsschlüssels (21);
wobei das System **dadurch gekennzeichnet ist, dass** das Vertrauensnetz Folgendes umfasst:
- Mittel (301) zum Speichern (63) des Verschlüsselungsschlüssels (21) und zum Erzeugen (62) eines Index (22) bei jeder Datenverschlüsselungsanforderung (41), wobei die Anforderung von einem Benutzer (31) ausgesendet wird, wobei der Index mit den folgenden Schritten erzeugt wird:
- Unterteilen des Verschlüsselungsschlüssels (21) in beliebige Blöcke (K1, K2, K3, K4, K5);
- Speichern der Blöcke in einem Speicherraum (2, 63);
- Erzeugen des Index (22), der die Adressfolge der Blöcke in dem Speicherraum enthält;
- Mittel (301, 303) zum Liefern der verschlüsselten Daten (40') und des Index (22) zum Sender (31);
- Mittel (103) zum Rekonstituieren des Verschlüsselungsschlüssels von einem Index (22) bei einer von einem Benutzer (32) gesendeten Verschlüsselungsanforderung, wobei die Anforderung von dem Index (22) und den verschlüsselten Daten (40') begleitet wird, wobei die Ver- und Entschlüsselungsmittel (302) die Entschlüsselung der Daten mittels des rekonstituierten Verschlüsselungsschlüssels bewirken.

5. System nach Anspruch 4, **dadurch gekennzeichnet, dass** die Ver- und Entschlüsselungsmittel (302) vor jeder Verschlüsselung einen wegwerfbaren Verschlüsselungsschlüssel (21) für den einmaligen Gebrauch erzeugen, wobei dieser Schlüssel zum Verschlüsseln verwendet wird.

6. System nach Anspruch 4 oder 5, **dadurch gekennzeichnet, dass** die Speicher- und Indexerzeugungsmittel (301) die Blöcke des Verschlüsselungsschlüssels (21) gemäß einem Deduplizierungsmechanismus speichern.

7. System nach einem der Ansprüche 4 bis 6, **dadurch gekennzeichnet, dass** die Mittel zum Speichern, Indexerzeugen und Rekonstituieren des Verschlüsselungsschlüssels im selben Server (301) integriert sind.

8. System nach einem der Ansprüche 4 bis 7, **dadurch gekennzeichnet, dass** die Mittel (302) zum Ver- und Entschlüsseln von Daten ein Verschlüsselungsserver sind zum:
- Empfangen (41) von Verschlüsselungsanforderungen mit den zu verschlüsselnden Daten (40);
- Liefern (42) der Verschlüsselungsschlüssel (21) zu den Speicher- und Indexerzeugungsmitteln (301);
- Empfangen (53) der verschlüsselten Daten und des rekonstituierten Verschlüsselungsschlüssels, die von den Mitteln (301) zum Rekonstituieren des Verschlüsselungsschlüssels ausgesendet wurden;
- Wiederherstellen (54) der entschlüsselten Daten.

9. System nach einem der Ansprüche 4 bis 8, **dadurch gekennzeichnet, dass** das Vertrauensnetz (30) einen Austauschserver (303) umfasst zum:
- Empfangen (51) der Entschlüsselungsanforderungen mit den verschlüsselten Daten (40') und dem Index (22);
- Übertragen (52) der verschlüsselten Daten und ihres Index zu den Mitteln (103) zum Rekonstituieren des Verschlüsselungsschlüssels;
- Empfangen (43) der verschlüsselten Daten und ihres Index (22), die von den Speicher- und Indexerzeugungsmitteln (301) ausgesandt wurden;
- Liefern (44) der verschlüsselten Daten und ihres Index.

10. System nach einem der Ansprüche 4 bis 9, **dadurch gekennzeichnet, dass** ein Deduplizierungsserver (301) die Mittel zum Speichern, Indexerzeugen und Rekonstituieren des Verschlüsselungsmittels umfasst.
